# EUROPÄISCHE PATENTSCHRIFT

(11) **EP 0 272 749 B1**
(45) Veröffentlichungstag und Bekanntmachung des Hinweises auf die Patenterteilung: **04.08.1993**
(21) Anmeldenummer: 87202514.3
(22) Anmeldetag: 15.12.1987
(51) Int. Cl.: G01M 11/00

(54) **Anordnung zur Kontrolle von Lichtwellenleiter-Stirnflächen**
Device for controlling optical-fibre end faces
Dispositif de contrôle de la face terminale de fibres optiques

(30) Priorität: 20.12.1986 DE 3643694
(43) Veröffentlichungstag der Anmeldung: 29.06.1988
(73) Patentinhaber: Philips Patentverwaltung GmbH, 22335 Hamburg (DE); Philips Electronics N.V., 5621 BA Eindhoven (NL)
(72) Erfinder: Noll, Joachim, Dipl.-Ing., D-2085 Quickborn (DE); Blazek, Vladimir, Dr. Ing., D-5100 Aachen (DE); Schmitt, Hans-Jürgen, Prof. Dr. rer. nat., D-5100 Aachen (DE)
(74) Vertreter: Koch, Ingo

(56) Entgegenhaltungen:
- EP-A- 0 063 954
- CA-A- 1 213 057
- PATENT ABSTRACTS OF JAPAN, Band 8, Nr. 183 (P-286)[1620], 23. August 1984; & JP-A-59 74 520 (SUMITOMO DENKI KOGYO K.K.) 27-04-1984
- Applied Optics, vol. 16, no. 4, April 1977, pp. 818-819

## Beschreibung

Die Erfindung bezieht sich auf eine Anordnung zur Kontrolle von Lichtwellenleiter-Stirnflächen durch Beobachtung des Interferenzfeldes, welches im Luftspalt zwischen einer planen transparenten Platte und der Stirnfläche einesorthogonal an die Platte geführten LWL durch Meßlicht gebildet wird.

Bei einem nach Applied Optics, Vol. 16, 1977, S. 818/819 bekannten derartigen Verfahren wird das Meßlicht über eine aufwendige Freistrahloptik auf die Stirnflächen eines LWL gerichtet.

Der Erfindung liegt die Aufgabe zugrunde, die Anordnung der eingangs genannten Art derart zu vereinfachen, daß sie weniger aufwendig ist und weniger Platz beansprucht.

Die Lösung gelingt dadurch, daß das Meßlicht durch die LWL in Richtung auf die zu beobachtenden Stirnflächen geleitet ist.

Bei der erfindungsgemäßen Anordnung werden keine raumaufwendigen Bauteile für eine Freistrahloptik zur Beleuchtung der Stirnflächen benötigt. Dennoch ist die Helligkeit der Ausleuchtung auf die zu beobachtenden Stirnflächen der jeweiligen LWL beschränkt, so daß fehlerhafte, insbesondere nicht rechtwinklig zur Achse verlaufende Stirnflächen sogar mit bloßem Auge diskriminierbar sind. Wegen des geringen Platzbedarfs der erforderlichen Bauelemente ist eine integrierte Anwendung bei einem Spleißgerät zur Verbindung zweier LWL möglich.

Das andere Ende eines LWL braucht nicht zugänglich zu sein, wenn das Meßlicht durch einen Krümmungskoppler in einen gekrümmten Bereich des LWL eingekoppelt wird.

Eine bevorzugte aufwandsarme Lösung ist dadurch gekennzeichnet, daß in den Krümmungskoppler mindestens zwei LWL nebeneinander gelegt sind, in welche durch einen einzigen Lichtsender Licht eingekoppelt ist. Diese Lösung empfiehlt sich insbesondere, wenn die Stirnflächen zweier zu verbindender LWL vor Herstellung der Verbindung beobachtet werden sollen.

Bevorzugt ist das erfindungsgemäße Verfahren in Verbindung mit einem Spleißgerät anwendbar, wobei dann die Stirnflächen mittels einer in die LWL-Verbindungseinrichtung integrierten Beobachtungseinrichtung beobachtet werden können.

Eine besonders vorteilhafte einfach handhabbare Lösungsmöglichkeit besteht darin, daß als Beobachtungseinrichtung ein transparenter Meßblock mit planparallelen Endflächen zwischen die Stirnflächen der LWL gebracht ist, an welchen die LWL-Stirnflächen orthogonal geführt werden, und daß über im Meßblock gegen die Endflächen um etwa 45° geneigte Spiegelflächen jeweils eines der beiden gebildeten Interferenzfelder auf eine gemeinsame Beobachtungsstelle gespiegelt ist. Dabei besteht weiterhin die Möglichkeit, daß die Interferenzfelder mittels der für die Kontrolle der geometrischen Lage der LWL dienenden Beobachtungseinrichtung beobachtet werden.

Es ist auch möglich, eine erfindungsgemäße Anordnung nachträglich einem Spleißgerät zuzuordnen. Nur ein geringer Mehraufwand ist nötig, wenn auf eine gemeinsame Beobachtungsstelle über einen schwenkbaren Umlenkspiegel in einer ersten Stellung das Bild der Interferenzfelder und in einer zweiten Stellung die Bilder der geometrischen Lage der LWL abgebildet werden.

Es ist aber statt dessen auch möglich, daß mittels einer halbdurchlässigen Spiegelfläche die Bilder vom Ort der Interferenzfelder und vom Ort der geometrischen Kopplunglage der LWL auf die gleiche Bildebene abgebildet werden und daß entweder der Ort der Interferenzfelder oder der Ort der Kopplungslage der LWL beleuchtet werden.

Die Erfindung wird anhand der Beschreibung von in der Zeichnung dargestellten vorteilhaften Ausführungsbeispielen näher erläutert. Dabei sind die wesentlichen Elemente der erfindungsgemäßen Anordnung nur schematisch und keineswegs maßstäblich augedeutet.
- Fig. 1: zeigt eine erste erfindungsgemäße Anordnung in Verbindung mit einem Spleißgerät.
- Fig. 2: zeigt eine zweite Anordnung, welche vorteilhaft in ein Spleißgerät integriert ist.

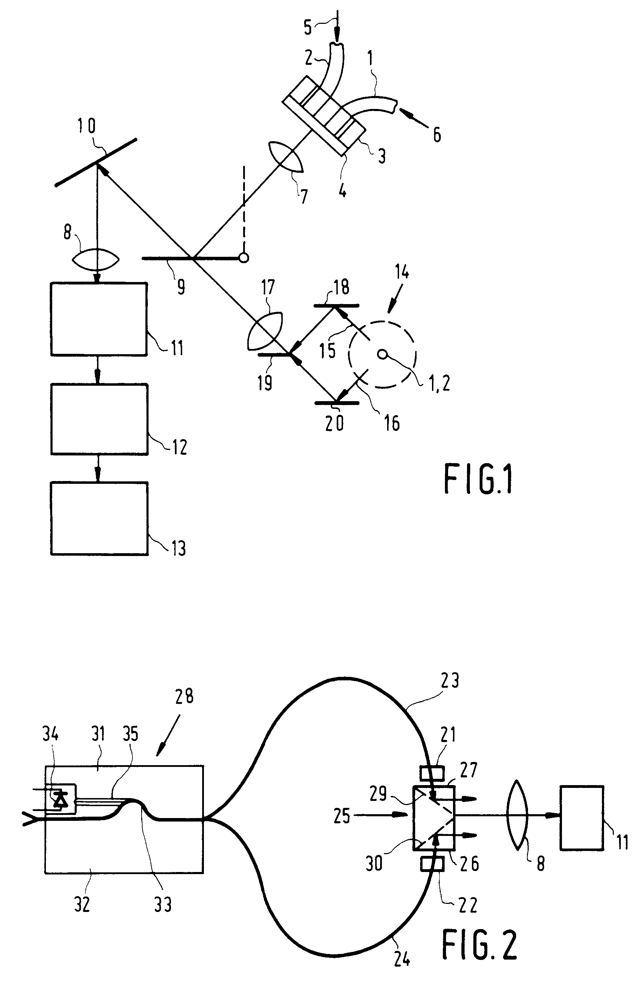

In Figur 1 sind die LWL 1 und 2 durch kapillare Kanäle einer Halterung 3 orthogonal gegen die transparente Platte 4 geführt. Durch in Richtung der Pfeile 5 und 6 eingeleitetes Meßlicht werden in den engen Luftspalten zwischen den LWL 1 bzw. 2 und der Platte 4 Interferenzfelder gebildet, welche über die Optiken 7 und 8 sowie die Umlenkspiegel 9 und 10 auf die lichtempfindliche Fläche einer Videokamera 11 abgebildet werden.

Durch eine Auswerteelektronik 12 werden die Bildsignale ausgewertet und schließlich auf einem Monitor 13 dargestellt. Wenn die Stirnflächen als qualitativ gut ansehbar sind, werden die LWL 1 und 2 aus der Halterung 3 entnommen und auf die nicht dargestellten Manipulatoren einer Spleißvorrichtung 14 gespannt. Die geometrische Ausrichtung der Enden der LWL 1 und 2 in der Spleißvorrichtung kann in zwei zueinander senkrechten Richtungen 15 und 16, nachdem der Spiegel 9 in die gestrichelte Lage geschwenkt wurde, über die Optik 17 sowie die Spiegel 18, 19 und 20 ebenfalls mittels der Videokamera 11 beobachtet werden.

Die in Figur 2 dargestellte Meßeinrichtung kann ohne nennenswerten Platzbedarf in ein Spleißgerät der nach der EP-A1 63 954 bekannten Art integriert werden, von welcher nur die Manipulatoren 21 und 22 angedeutet sind, durch welche die Enden der LWL 23 und 24 zu koaxialer Ausrichtung verfahrbar sind.

Bevor die Stirnflächen der LWL 21 und 22 zum Verspleißen aufeinander zugeführt werden, wird ein Meßblock 25 zwischen diese geschwenkt, dessen planparallele Flächen 26 und 27 an den Stirnflächen der LWL 23 bzw. 24 anliegen. In den gebildeten Zwischenluftspalten werden durch das über den Tandemkoppler 28 in beide LWL eingekoppelte Meßlicht Interferenzfelder erzeugt, welche über die im Meßblock 25 befindlichen Spiegelflächen 29 und 30 und die Optik 8 auf die Videokamera 11 abgebildet werden.

Der Tandemkoppler 28 besteht aus zwei aufeinander gelegten korrenspondierenden Biegekörpern 31 und 32. Beide LWL 23 und 24 sind durch den oberen Biegekörper 31 in eine im unteren Biegekörper 32 mit einem Biegebuckel 33 verlaufende Nut gedrückt.

Im Bereich des Biegebuckels 33 wird durch den Lichtsender 34 durch den Lichtführungskanal 35 Licht in beide LWL 23 und 24 eingekoppelt. Der Tandemkoppler 28 ist vorteilhaft Bestandteil einer einheitlichen kompakten Meß-und Spleißeinrichtung.

Die Qualität der Stirnflächen der LWL kann vor dem Verspleißen ohne nennenswerten Mehraufwand kontrolliert werden. LWL mit fehlerhaften Stirnflächen können vor dem Spleißen aussortiert bzw. nachgearbeitet werden, so daß nicht mehr die Gefahr besteht, daß durch nicht einwandfreie Stirnflächen verursachte Dämpfungserhöhungen erst nach dem Spleißen entdeckt werden.

## Patentansprüche

1. Anordnung zur Kontrolle von Lichtwellenleiterstirnflächen durch Beobachtung des Interferenzfeldes, welches im Luftspalt zwischen einer planen transparenten Platte (4) und der Stirnfläche eines orthogonal an die Platte (4) geführten LWL (1,2) durch Meßlicht gebildet wird,
dadurch gekennzeichnet, daß das Meßlicht durch den LWL (1,2,23,24) in Richtung auf die zu beobachtende Stirnfläche geleitet ist.

2. Anordnung nach Anspruch 1,
dadurch gekennzeichnet, daß das Meßlicht durch einen Krümmungskoppler (28) in einen gekrümmten Bereich des LWL (23,24) eingekoppelt ist.

3. Anordnung nach Anspruch 2
dadurch gekennzeichnet, daß in den Krümmungskoppler (28) mindestens 2 LWL (23 und 24) nebeneinander gelegt sind, in welche durch einen einzigen Lichtsender (34) Licht eingekoppelt ist.

4. Anordnung nach einem der Ansprüche 1 bis 3,
dadurch gekennzeichnet, daß die Stirnflächen zweier zu verbindender LWL (1,2 bzw. 23,24) derart in eine Halteeinrichtung eingelegt sind, daß vor Herstellung der Verbindung beide Stirnflächen beobachtbar sind.

5. Anordnung nach Anspruch 4,
dadurch gekennzeichnet, daß die Beobachtungseinrichtung der Stirnflächen in eine LWL-Verbindungseinrichtung (14) integriert ist.

6. Anordnung nach Anspruch 5,
dadurch gekennzeichnet, daß die Beobachtungseinrichtung ein transparenter Meßblock (25) mit planparallelen Endflächen (26,27) ist, welcher zwischen die Stirnflächen der LWL (23,24) gebracht ist und an welchen die LWL (23,24) orthogonal mit ihren Stirnflächen geführt sind, und daß über in einem Meßblock (25) gegen dessen Endflächen (26,27) um etwa 45° geneigte Spiegelflächen (29,30) jeweils eines der beiden gebildeten Interferenzfelder auf eine gemeinsame Beobachtungsstelle (11) gespiegelt ist.

7. Anordnung nach einem der Ansprüche 1 bis 7,
dadurch gekennzeichnet, daß die Interferenzfelder mittels einer für die Kontrolle der geometrischen Lage der LWL (1,2 bzw. 23,24) dienenden Beobachtungseinrichtung beobachtbar sind.

8. Anordnung nach Anspruch 5,
dadurch gekennzeichnet, daß auf eine gemeinsame Beobachtungsstelle in einer ersten Stellung eines schwenkbaren Umlenkspiegels (9) das Bild der Interferenzfelder und in einer zweiten Schwenkstellung des Umlenkspiegels Bilder der geometrischen Lage der LWL (1,2) abbildbar sind.

9. Anordnung nach Anspruch 5,
dadurch gekennzeichnet, daß mittels einer halbdurchlässigen Spiegelfläche die Bilder vom Ort der Interferenzfelder und vom Ort der geometrischen Kopplungslage der LWL (23,24) auf die gleiche Bildebene abgebildet sind und daß entweder der Ort der Interferenzfelder oder der Ort der Kopplungslage der LWL beleuchtet ist.

## Claims

1. An arrangement for inspecting light waveguide end faces by observing the interference pattern formed by means of measuring light in the airgap between a plane transparent plate (4) and the end face of a light waveguide (1, 2) arranged orthogonally with respect to said plate (4), characterized in that the measuring light is led towards the end faces to be observed via the light waveguides (1, 2, 23, 24).

2. An arrangement as claimed in Claim 1, characterized in that the measuring light is coupled into a curved section of the light waveguide (23, 24) by means of a curvature coupler (28).

3. An arrangement as claimed In Claim 2, characterized in that in the curvature coupler (28) at least two light waveguides (23 and 24) into which light is coupled by means of a single light transmitter (34), are juxtaposed.

4. An arrangement as claimed in any one of Claims 1 to 3, characterized in that the end faces of two light waveguides (1, 2, and 23, 24) to be connected are put into a holding device, in such a way that both end faces are observable before establishing the connection.

5. An arrangement as claimed in Claim 4, characterized in that the observation device for observing the end faces is integrated in a light waveguide splicer (14).

6. An arrangement as claimed in Claim 5, characterized in that the observation device consists of a transparent measuring block (25) which has plane-parallel end surfaces (26, 27) and is arranged between the end faces of the light waveguides (23, 24), which surfaces extend orthogonally to the end faces of the light waveguides (23, 24), and in that each time one of the two formed interference patterns is reflected on a common observation point (11) via reflecting surfaces (29, 30) which are inclined at an angle of approximately 45° with respect to the end surfaces (26, 27) of the measuring block (25).

7. An arrangement as claimed in any one of Claims 1 to 6, characterized in that the interference patterns are observable by means of the observation device for inspection of the geometrical positions of the light waveguides (1, 2 and 23, 24).

8. An arrangement as claimed in Claim 5, characterized in that the interference patterns can be imaged on a common observation point via a pivotable deflecting mirror (9) arranged in a first position and that the geometrical positions of the light waveguides (1, 2) can be imaged, via said mirror arranged in a second position.

9. An arrangement as claimed in Claim 5, characterized in that the interference patterns and the geometrical coupling positions of the light waveguides (23, 24) are imaged on the same image plane by means of a semi-transparent reflecting surface and in that either the locations of the interference patterns or the coupling positions of the light waveguides are illuminated.

## Revendications

1. Dispositif pour le contrôle de faces terminales de guides de lumière par observation du champ d'interférence engendré à l'aide de lumière de mesure dans la fente d'air entre une plaque plane transparente (4), et la face terminale d'un guide de lumière (1, 2) positionnée orthogonalement près de cette plaque (4), caractérisé en ce que la lumière de mesure est dirigée par l'intermédiaire du guide de lumière (1, 2, 23, 24) sur la face terminale à observer.

2. Dispositif selon la revendication 1, caractérisé en ce que la lumière de mesure est introduite dans une zone courbée du guide de lumière (23, 24) par l'intermédiaire d'un coupleur de courbure (28).

3. Dispositif selon la revendication 2, caractérisé en ce que dans le coupleur de courbure (28) sont juxtaposés aux moins deux guides de lumière (23, 24) dans lesquels de la lumière est introduite par l'intermédiaire d'un seul transmetteur de lumière (34).

4. Dispositif selon l'une des revendications 1 à 3, caractérisé en ce que les faces terminales des deux guides de lumière à connecter (1, 2 ou 23, 24) sont disposés dans un dispositif de support de manière à permettre l'observation des deux surfaces terminales avant l'établissement de la connexion.

5. Dispositif selon la revendication 4, caractérisé en ce que le dispositif d'observation des faces terminales est intégré dans un dispositif de connexion de guides de lumière (14).

6. Dispositif selon la revendication 5, caractérisé en ce que le dispositif d'observation est constitué par un bloc de mesure transparent (25) présentant des surfaces terminales plan-parallèles (26, 27), disposé entre les faces terminales des guides de lumière (23,24), et près duquel sont positionnées orthogonalement les faces terminales des guides de lumière (23, 24), et en ce que les deux champs d'interférence engendrés sont réfléchis sur un point d'observation commun (11) par l'intermédiaire des surfaces de réfléchissement (29, 30) inclinées sous un angle de l'ordre de 45° par rapport aux surfaces terminales (26, 27) du bloc de mesure (25).

7. Dispositif selon l'une des revendications 1 à 7, caractérisé en ce que les champs d'interférence peuvent être observés par l'intermédiaire d'un dispositif d'observation conçu pour contrôler la position géométrique des guides de lumière (1, 2 respectivement 23, 24).

8. Dispositif selon la revendication 5, caractérisé en ce que dans une première position d'un miroir de déviation pivotant (9) l'image des champs d'interférence et dans une deuxième position de pivotement du miroir de déviation des images de la position géométrique des guides de lumière (1,2) peuvent être projetées sur un endroit d'observation commun.

9. Dispositif selon la revendication 5, caractérisé en ce que les images des champs d'interférence et celles de la position de couplage géométrique des guides de lumière (23, 24) soient projetées sur le même plan focal par l'intermédiaire d'une surface réfléchissante semi-transparente et en ce que soit l'endroit des champs d'interférence soit celui de la position de couplage des guides de lumière soit éclairé.
